# FASCICULE DE BREVET EUROPEEN

(11) **EP 3 234 790 B1**
(45) Date de publication et mention de la délivrance du brevet: **06.03.2019**
(21) Numéro de dépôt: 14833593.8
(22) Date de dépôt: 15.12.2014
(51) Int. Cl.: G06F 15/02, G06F 1/16

(54) **CALCULATRICE**
RECHNER
CALCULATOR

(43) Date de publication de la demande: 25.10.2017
(73) Titulaire: Boulanaache, Malik, 1020 Renens (CH)
(72) Inventeur: Boulanaache, Malik, 1020 Renens (CH)
(74) Mandataire: Wenger, Joel-Théophile
(86) Numéro de dépôt international: PCT/IB2014/002791
(87) Numéro de publication internationale: WO 2016/097777

(56) Documents cités:
- EP-A2- 1 168 147
- WO-A1-2005/064445
- US-A- 4 591 702

## Description

### DOMAINE DE L'INVENTION

La présente invention concerne une calculatrice électronique comprenant une alimentation électrique, une interface de saisie pour entrer des nombres et des opérations mathématiques à effectuer, une mémoire (pour mémoriser des données, des nombres et des opérations mathématiques à effectuer), un microprocesseur pour effectuer des opérations sur les nombres entrés, un dispositif d'affichage numérique pour indiquer le résultat d'opérations effectuées sur les nombres entrés, et un boîtier comportant un bord avant (ou proximal) et un bord arrière (ou distal) situés à l'opposé l'un de l'autre, le boîtier comportant encore une base et une face supérieure s'étendant toutes les deux entre le bord arrière et le bord avant. L'invention concerne tout aussi bien une calculatrice électronique autonome (en anglais « stand alone ») qu'une calculatrice électronique servant de périphérique d'ordinateur, la calculatrice électronique étant alors adaptée pour servir d'interface de saisie à un ordinateur avec lequel elle est en communication (avec ou sans fil). La présente invention concerne en outre un procédé d'utilisation de ladite calculatrice électronique.

### ART ANTERIEUR

On connaît de très nombreux modèles de calculatrices électroniques correspondant à la définition ci-dessus. A titre d'exemple, on citera la calculatrice décrite dans le document de brevet US 4,217,656. Dans les calculatrices électroniques connues, l'interface de saisie est classiquement constituée par un clavier numérique. Ce clavier numérique comprend tout d'abord 10 touches correspondant aux chiffres de 0 à 9. De plus, il doit nécessairement contenir un certain nombre de touches de commandes. Parmi les touches de commande habituelles, quatre touches correspondent aux quatre opérateurs arithmétiques : plus (+), moins (-), fois (X) et divisé par (/) ; et une touche correspond au calcul du résultat (égale ; =). Finalement, la touche « point » (.) est prévue pour permettre d'entrer les décimales de nombres fractionnaires.

Le document US 4,591,702 décrit une calculatrice possédant une manette sous la forme d'un anneau pour entrer les différents chiffres.

Le document WO 2005/064445 décrit un téléphone possédant une mannette sous la forme d'un manche à balai pour entrer les différents chiffres.

Un inconvénient de la plupart des calculettes et autres calculatrices électroniques connues est qu'elles ne sont pas adaptées à la saisie à une seule main en aveugle. En effet, le clavier numérique des calculatrices électroniques comprend le plus souvent au moins cinq rangées de quatre touches. Un nombre de touches aussi élevé entraîne nécessairement un va-et-vient des doigts entre les touches. Un tel va-et-vient exclut pratiquement une frappe à l'aveugle.

Pour essayer de remédier à ce problème, on a l'habitude de munir la touche « 5 » du clavier numérique d'un petit repère en relief. Ce repère a une fonction analogue à celle des deux repères en relief formés sur les touches « F » et « J » des claviers de machines à écrire. Ainsi, grâce à la présence du repère, en s'exerçant à ramener systématiquement son majeur au-dessus de la touche « 5 » après chaque dépression de touche, un utilisateur de calculette pourrait en principe apprendre à garder sa main dans une position bien déterminée relativement au clavier numérique. L'expérience montre toutefois que cette technique est difficile à maîtriser, et qu'elle occasionne de plus une fatigue considérable au niveau de la main et du poignet.

### BREF EXPOSE DE L'INVENTION

Un but de la présente invention est de remédier aux problèmes de l'art antérieur qui viennent d'être exposés en fournissant une calculatrice électronique avec laquelle la saisie à une main à l'aveugle est facilitée. La présente invention atteint ce but en fournissant une calculatrice électronique conforme à la revendication 1 annexée.

Conformément à l'invention, la saisie des chiffres est opérée à l'aide d'une manette du type « manche à balai » (en anglais « joystick »). Un avantage de cette caractéristique est qu'il est ainsi possible de commander la saisie des nombres à l'aide du creux de la main, les doigts et le pouce restant donc libres d'accomplir simultanément d'autres tâches.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une vue en perspective oblique de dessus illustrant une calculatrice correspondant à un premier mode de réalisation de l'invention ;
- figure 2 est une vue schématique de côté de la calculatrice de la figure 1 ;
- la figure 3 est une vue en perspective oblique de dessous de la calculatrice des figures 1 et 2 ;
- la figure 4 est une vue semblable à la figure 1, illustrant une calculatrice électronique correspondant à un deuxième mode de réalisation de l'invention ;
- la figure 5 est une vue schématique de côté de la calculatrice de la figure 4 ;
- la figure 6 est une vue semblable aux figures 1 et 4, illustrant une calculatrice électronique correspondant à un troisième mode de réalisation de l'invention ;
- la figure 7 est une vue schématique de côté dé la calculatrice de la figure 6 ;
- la figure 8 est une vue semblable à celles des figures 1, 4 et 6 illustrant une calculatrice électronique correspondant à un quatrième mode de réalisation destiné principalement aux gauchers.

### DESCRIPTION DETAILLEE DE MODES DE REALISATION

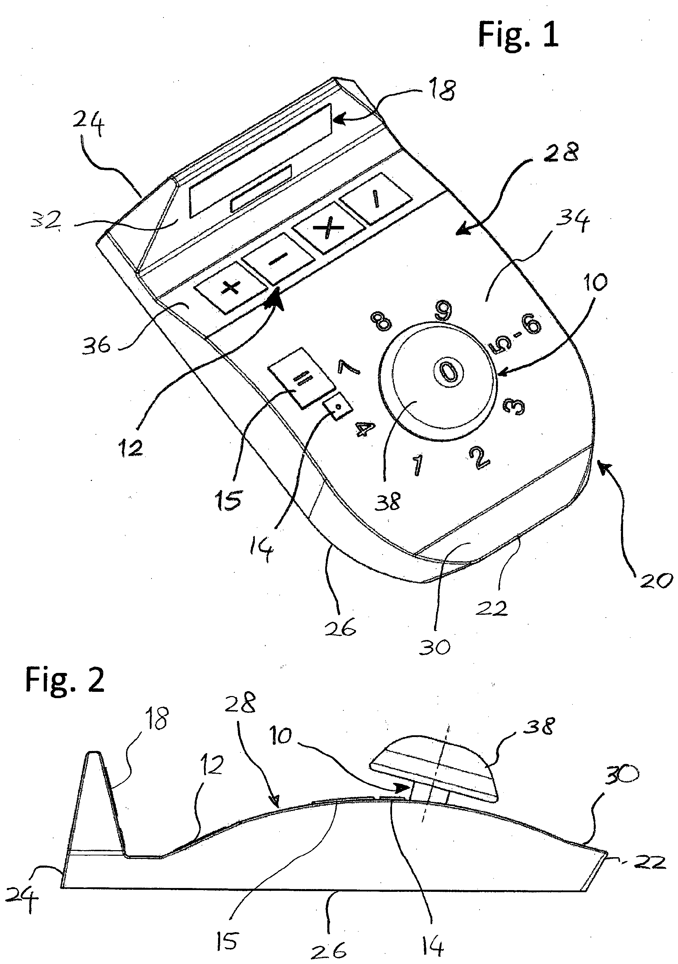

Les figures 1, 2 et 3 représentent une calculatrice électronique qui correspond à un premier mode de réalisation particulier de l'invention. La calculatrice représentée comprend une manette 10, quatre premières touches qui sont actionnables par les quatre doigts de la main et qui sont globalement référencée 12, deux deuxièmes touches qui sont actionnables par le pouce et qui sont référencées 14 et 15, un affichage qui est globalement référencé 18, et un boîtier 20 qui porte la manette, les touches et l'affichage. Pour aider à la compréhension des explications qui vont suivre, on a subdivisé le boîtier en plusieurs éléments qui sont un bord avant (ou proximal) 22, un bord arrière (ou distal) 24 situé à l'opposé du bord avant, une face inférieure faisant office de base 26, et une face supérieure 28. On comprendra que la base et la face supérieure s'étendent chacune entre le bord arrière 24 et le bord avant 22.

La face supérieure 28 du boîtier est elle-même encore subdivisée en plusieurs zones dans les figures. Ces zones sont tout d'abord une première zone 30 qui jouxte immédiatement le bord avant 22 du boîtier, et une zone d'affichage 32 placée tout en arrière au niveau du bord arrière 24. Deux zones de saisie 34 et 36 sont intercalées entre les zones 30 et 32. Les deux zones de saisie sont la zone de saisie avant 34 qui entoure la manette 10 et la zone de saisie arrière 36 qui contient les premières touches 12 actionnables par les quatre doigts de la main. La première zone 30 ne porte pas de touches, elle peut éventuellement servir de zone d'appui pour la main de l'utilisateur. D'autre part, dans le mode de réalisation du présent exemple, les deux deuxièmes touches 14 et 15 sont prévues pour être actionnées par le pouce. Comme le montre la figure 1, les touches 14 et 15 sont disposées en arrière de la manette 10 dans la zone de saisie 34. On notera également qu'elles sont déportées sur la gauche relativement à l'axe longitudinal de la calculatrice électronique.

Comme on peut le voir sur la figure 1, les touches de la calculatrice portent des signes distinctifs. Dans le présent exemple, les quatre premières touches portent respectivement les signes correspondant aux quatre opérateurs arithmétiques. L'ordre des opérateurs est le suivant : de gauche à droite, d'abord le plus « + », ensuite le moins « - », le fois « X » et enfin le divisé par « / ». On peut voir également qu'une des deuxièmes touches 15 porte le signe égale « = » et que l'autre deuxième touche 14 porte un point (de façon habituelle sur les calculatrices, le point est préféré à la virgule pour séparer la partie entière de la partie décimale des nombres). Dans l'exemple représenté, la manette 10 porte à son extrémité un capuchon 38 dont le sommet est marqué du chiffre « 0 ». Les signes correspondant aux neuf autres chiffres sont disposés en cercle autour de la manette 10 sur la face supérieure 28.

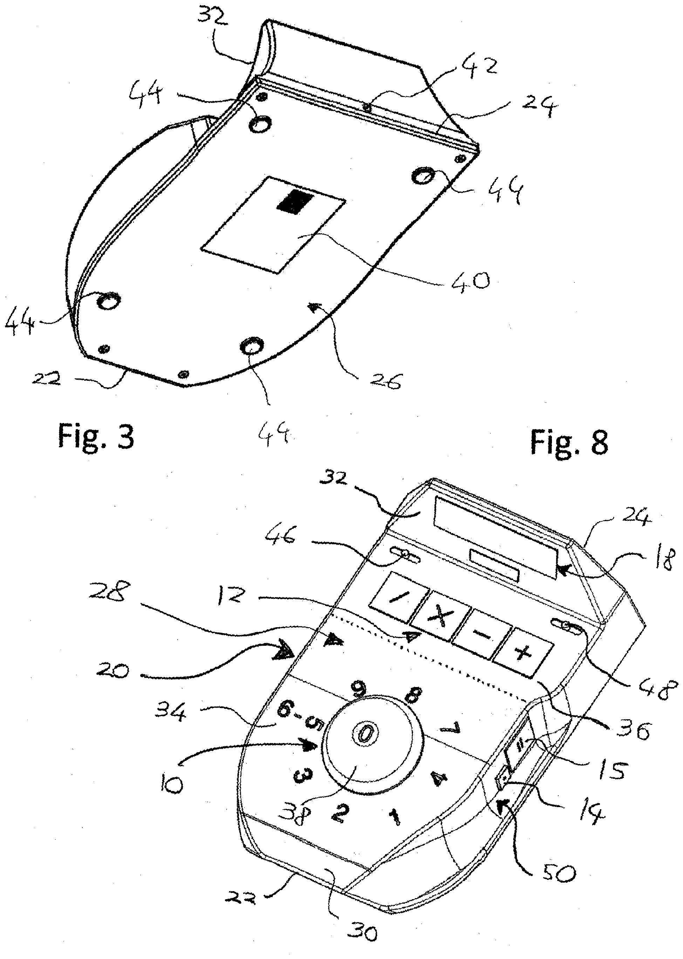

Dans l'exemple illustré, l'affichage 18 est un affichage numérique qui peut être de tout type connu de l'homme du métier. L'affichage 18 peut par exemple fonctionner avec des diodes électroluminescentes (LED). Alternativement, il pourrait par exemple comporter des cellules à cristal liquide (LCD). L'affichage et les divers autres composants électroniques de la calculatrice doivent être alimentés en électricité. A cet effet, la calculatrice comporte une alimentation électrique (non représentée). Dans le mode de réalisation qui fait l'objet des figures 1, 2 et 3, l'alimentation électrique pourrait être constituée par exemple de trois piles de 1.5V. La vue en perspective de la figure 3 montre le couvercle 40 d'une trappe de piles dans laquelle sont logées les trois piles (non représentées).

En se référant encore à la figure 3, on peut voir une prise 42 prévue pour recevoir la fiche du cordon d'alimentation basse tension (non représenté) d'un chargeur (non représenté) branché sur le secteur. Le chargeur est prévu pour alimenter la calculatrice en courant continu. Selon diverses variantes, ce courant peut être utilisé pour recharger les piles (s'il s'agit de piles rechargeables), ou alternativement pour alimenter directement la calculatrice en lieu et place des piles. Finalement, la figure 3 montre encore quatre pieds en caoutchouc 44 qui sont montés sous la base 26 de la calculatrice.

De manière connue de l'homme du métier, la calculatrice de l'invention est encore équipée d'un microprocesseur (non représenté) et d'une mémoire (non représentée). Les touches 12, 14 et 15 sont montées de manière conventionnelle dans des ouvertures du boîtier 20, de manière à ce qu'elles jouent le rôle de contacteur pour commander le microprocesseur. L'agencement des composants électroniques de la calculatrice et leur fonctionnement ne seront pas décrits en détail, l'invention ne concernant pas directement ces questions. Précisons toutefois qu'on trouve par exemple une description du fonctionnement d'une calculatrice électronique dans le document de brevet US 4,217,656 déjà mentionné, qui est intitulé « electronic calculator ».

Conformément à l'invention, la saisie des chiffres est opérée à l'aide de la manette 10 en lieu et place du clavier numérique utilisé dans les calculatrices de l'art antérieur. La manette 10 est du type « manche à balai » (en anglais « joystick »). De telles manettes sont connues de l'homme du métier. On en trouve une description par exemple dans le document de brevet US 4,124,787 intitulé « joystick controller mechanism operating one or plural switches sequentially or simultaneously ». On trouve également des manettes du type « manche à balai » dans le commerce. On peut citer notamment le modèle « COM-09032 » disponible sur le site sparkfun.com. Dans un but de simplification on appellera ci-après « interface de saisie » de la calculatrice, l'ensemble formé par les touches 12, 14 et 15 et la manette 10.

Selon l'invention, la manette 10 est montée dans une ouverture de la zone de saisie avant 34, et elle est agencée pour pouvoir être basculée sélectivement dans une pluralité de positions actives en l'inclinant dans différentes directions à partir de sa position neutre. Comme on va le voir plus en détail, chacune des directions correspond à un chiffre différent, et le microprocesseur est agencé pour associer chaque basculement de la manette dans une des positions actives à la saisie du chiffre correspondant. Selon l'invention, la manette 10 est prévue pour être actionnée à l'aide du creux de la main. Pour utiliser l'interface de saisie de la calculatrice conformément au procédé d'utilisation de l'invention, on place la main droite en position de saisie au-dessus de la calculatrice. Dans la position de saisie, la main est tournée paume vers le bas et les doigts sont orientés parallèlement à l'axe longitudinal de la calculatrice en direction du bord arrière 24. La main est positionnée par rapport à la calculatrice de manière à ce que la paume coiffe la manette 10, le capuchon 38 de la manette 10 pouvant alors venir s'insérer dans le creux de la main de manière à être guidé entre les bords de ce dernier. Précisons qu'on appelle « creux de la main » la petite cavité qui se fait dans la paume de la main quand on la plie un peu, cette cavité étant bordée d'un côté par la racine du pouce.

Conformément à l'invention, les premières touches 12 sont positionnées relativement à la manette 10 de manière à ce que les extrémités des doigts d'une main d'un utilisateur puissent se trouver chacune en regard d'une des premières touches lorsque cette main est en position de saisie. On peut voir sur la figure 1 que, dans le présent exemple, la zone de saisie arrière 36 est inclinée vers l'arrière. De plus, les quatre premières touches 12 sont arrangées de manière à former une rangée rectiligne qui est orientée perpendiculairement à l'axe longitudinal de la calculatrice. On comprendra toutefois qu'au lieu de former une rangée rectiligne, les premières touches 12 pourraient par exemple former une rangée en arc de cercle. En effet, comme on l'a vu, les premières touches sont prévues pour être actionnées chacune par un doigt de la main. Dans ces conditions, comme les doigts d'une main n'ont pas tous la même longueur, il peut être avantageux d'arranger les touches sur un arc de cercle. Quoi qu'il en soit, on verra plus loin que pour des raisons d'ergonomie, la rangée formée par les touches 12 est de préférence orientée tangentiellement à un cercle concentrique à la manette, et cela que la rangée soit rectiligne ou en arc de cercle.

De façon conventionnelle, la manette 10 est munie de commutateurs formant un dispositif prévu pour identifier, suite à chaque basculement de la manette, la position active dans laquelle celle-ci se trouve. Le microprocesseur de la calculatrice reçoit de ce dispositif un signal spécifique pour chaque position active de la manette. On comprendra que le signal fourni dans une position active donnée est associé par le microprocesseur à un chiffre spécifique parmi les chiffres de zéro à neuf. De ce point de vue, le signal électrique que le microprocesseur reçoit de la manette peut donc être tout-à-fait équivalent au signal électrique reçu d'un clavier numérique dans une calculatrice de l'art antérieur.

Dans le mode de réalisation du présent exemple, la manette 10 peut être basculée dans huit directions qui sont désignées ci-après par les noms : nord, sud, est, ouest, nord-est, sud-est, nord-ouest et sud-ouest. De plus, c'est la direction de l'axe longitudinal de la calculatrice qu'on appelle le nord, l'orientation du nord étant vers l'arrière de la calculatrice. Chaque direction de basculement de la manette est associée l'indication d'un chiffre particulier. Comme le montre la figure, le nord correspond au 8, le sud au 2, l'est au 5, l'ouest au 4, le nord-est au 9, le sud-est au 3, le nord-ouest au 7, et enfin, le sud-ouest 1.

En plus des huit positions actives qui viennent d'être énumérées, la manette 10 du présent exemple en possède deux autres qui sont respectivement associées aux chiffres 0 et 6. On accède à une de ces deux positions actives supplémentaires simplement en enfonçant la manette axialement en direction de la face supérieure 28. On peut voir sur la figure 1 que cette neuvième position active correspond au chiffre 0 dans l'exemple illustré. L'homme du métier a à sa disposition de nombreuses possibilités pour définir la dixième et dernière position active (qui dans le présent exemple est associée au chiffre 6). Une manière satisfaisante du point de vue de l'ergonomie pour saisir le nombre « 6 » serait, par exemple, d'actionner simultanément la manette 10 et une des touches. Par exemple d'enfoncer la manette 10 axialement, comme pour saisir un zéro, et simultanément d'appuyer avec l'index sur la touche « + ». Le microprocesseur serait alors programmé pour associer le chiffre « 6 » à cette action combinée. On notera toutefois qu'il ne s'agit pas là de la solution utilisée dans l'exemple illustré. En effet, on peut comprendre à partir de la figure 1 que le chiffre « 6 » est saisi en basculant d'abord la manette 10 dans la direction est, comme pour le chiffre « 5 ». Ensuite, une fois la manette dans la position active est, on exerce une pression supplémentaire pour faire franchir un cran à la manette. La manette bascule ainsi d'un pas de plus dans la direction est, jusqu'à une position active supplémentaire associée au chiffre « 6 ». La solution qui vient d'être expliquée et qui est illustrée dans la figure 1 présente le défaut de nécessiter l'utilisation d'une manette non-standard donnant accès à une première et une deuxième position active par basculement dans une même direction. En revanche, cette solution possède le grand avantage de permettre de saisir tous les chiffres de 0 à 9 en utilisant uniquement la manette. De manière générale, on peut dire que la solution ci-dessus est la plus avantageuse du point de vue de l'ergonomie. On notera en outre que la correspondance entre les mouvements de la manette 10 et les chiffres correspondants reproduit sensiblement l'arrangement des touches d'un clavier numérique.

Dans le mode de réalisation illustré, la manette 10 est également utilisée pour allumer la calculatrice. Lorsque la calculatrice est éteinte et qu'un utilisateur enfonce la manette axialement en direction de la face supérieure 28 comme pour entrer le chiffre « 0 », l'action de l'utilisateur a pour résultat d'allumer la calculatrice. La calculatrice est de préférence prévue pour s'éteindre automatiquement lorsqu'aucune saisie n'a eu lieu depuis un certain nombre de secondes.

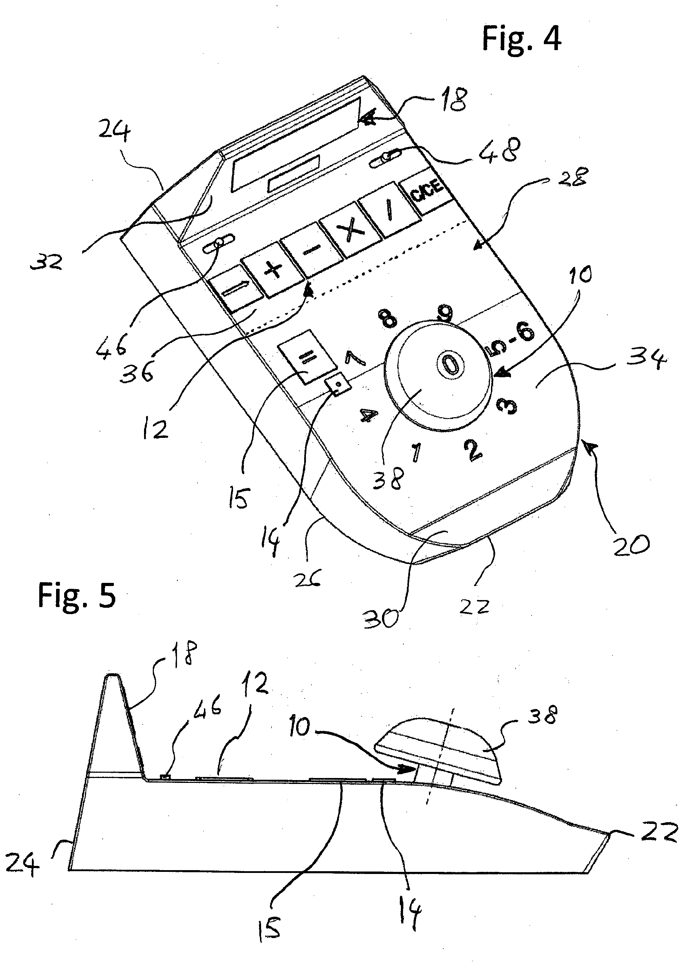

Les figures 4 et 5 sont des vues respectivement en perspective et de côté d'une calculatrice correspondant à un deuxième mode de réalisation de l'invention. Précisons que le premier et le deuxième mode de réalisation de l'invention ont beaucoup de caractéristiques en commun. C'est la raison pour laquelle les éléments des figures 4 et 5 qui sont identiques ou pratiquement identiques aux éléments correspondants des figures 1, 2 et 3 sont désignés par les mêmes références numériques.

En se référant maintenant plus particulièrement à la figure 4, on peut observer que la calculatrice représentée comporte deux commutateurs 46 et 48 qui n'existaient pas dans le premier mode de réalisation. Dans l'exemple représenté, le commutateur 48 permet de définir le nombre de décimale affichée pour les nombres fractionnaires. Le commutateur 46 est un commutateur à trois positions permettant de choisir de quelle manière la calculatrice arrondi les nombres fractionnaires. La première possibilité est de toujours arrondir les nombres vers le bas, la deuxième de toujours les arrondir vers le haut, et la troisième possibilité est d'arrondir les chiffres 1, 2, 3 et 4 vers le bas et les chiffres 5, 6, 7, 8 et 9 vers le haut.

On peut observer d'autre part sur la figure 4 que la calculatrice compte six premières touches actionnables par les doigts de la main. Parmi ces touches, les quatre qui occupent les positions les plus centrales portent respectivement les signes correspondant aux quatre opérateurs arithmétiques. Lorsqu'un utilisateur de la calculatrice tient sa main droite en position de saisie avec les doigts serrés, son index se trouve en regard du plus, son majeur en regard du moins, son annulaire en regard du fois, et enfin, son auriculaire en regard du divisé par. La première et la dernière position de la rangée de premières touches sont occupées par deux touches qui portent respectivement comme signe une flèche → et le sigle C/CE. De façon connue en soi, la touche → permet d'effacer le chiffre qui vient d'être saisi, alors que la touche C/CE permet d'effacer entièrement le calcul en cours pour permettre de recommencer. Lorsqu'un utilisateur de la calculatrice tient sa main droite en position de saisie il peut actionner la touche → avec l'index légèrement écarté des autres doigts. De même, il peut actionner la touche C/CE avec l'auriculaire.

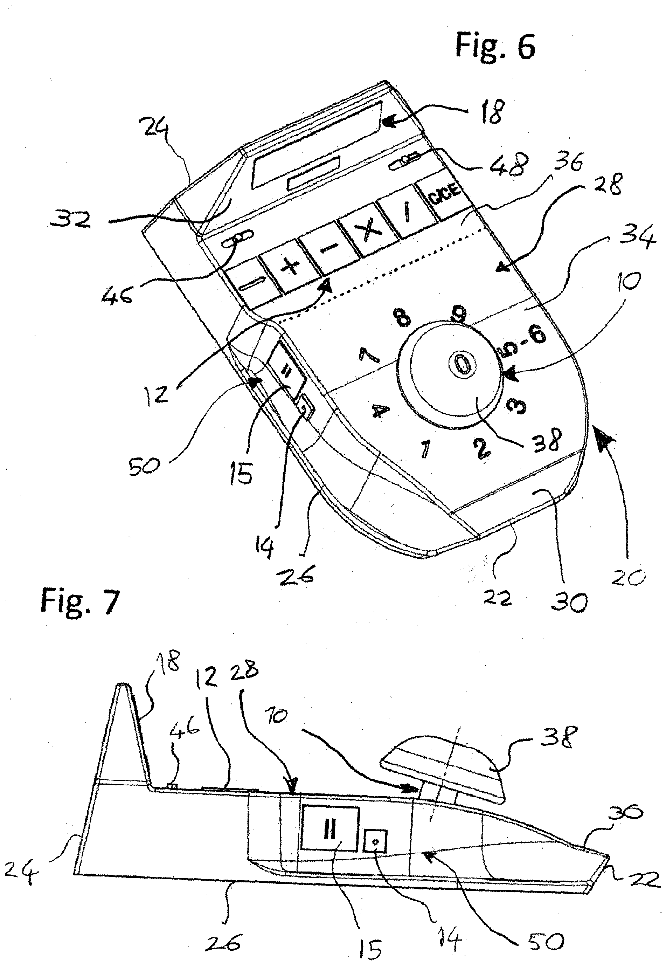

Les figures 6 et 7 sont des vues respectivement en perspective et de côté d'une calculatrice correspondant à un troisième mode de réalisation de l'invention. Comme on peut s'en rendre compte sur les figures, le troisième mode de réalisation de l'invention se distingue des deux précédents essentiellement par le fait que les deuxièmes touches 14 et 15 sont disposées sur une zone latérale 50 du boîtier 20, la zone 50 étant pratiquement verticale. En se référant plus particulièrement à la figure 6, on peut comprendre que, comme dans les modes de réalisation précédents, les deuxièmes touches 14 et 15 se trouvent en regard du pouce lorsque la main droite de l'utilisateur est en position de saisie. Toutefois, dans le troisième mode de réalisation, au lieu de se trouver au-dessus des deuxièmes touches, le pouce se trouve à côté de celles-ci. Ainsi, pour actionner les deuxièmes touches, le pouce doit accomplir un mouvement d'adduction au lieu du mouvement d'antépulsion qui était nécessaire avec les deux premiers modes de réalisation de la calculatrice.

La figure 8 est une vue en perspective d'une calculatrice correspondant à un quatrième mode de réalisation. Comme on va le voir, le quatrième mode de réalisation est particulièrement destiné aux personnes gauchères. En se référant simultanément à la figure 6 et à la figure 8, on peut observer que les deux calculatrices représentées sont très semblables. La différence principale réside dans le fait que, sur la figure 8, les deuxièmes touches 14 et 15 sont situées à droite de la manette 10 au lieu d'être à gauche. On comprendra que la calculatrice de la figure 8 est prévue pour être actionnée à l'aide de la main gauche au lieu de la main droite. On notera également que dans l'exemple illustré, l'ordre de succession des chiffres autour de la manette est inversé par rapport aux trois premiers modes de réalisation. Comme le montre la figure 8, le nord correspond au 8, le sud au 2, l'est au 4, l'ouest au 5, le nord-est au 7, le sud-est au 1, le nord-ouest au 9, et enfin, le sud-ouest 3. Finalement, une dernière différence avec la calculatrice de la figure 6 est que la calculatrice de la figure 8 ne comporte que quatre premières touches à l'instar de la calculatrice du premier mode de réalisation. Toutefois, dans le quatrième mode de réalisation, les premières touches sont arrangées dans un autre ordre.

On comprendra en outre que diverses modifications et/ou améliorations évidentes pour un homme du métier peuvent être apportées aux modes de réalisation qui font l'objet de la présente description sans sortir du cadre de la présente invention définie par les revendications annexées. En particulier, concernant les calculatrices prévues pour être actionnées avec la main gauche, on comprendra qu'elles pourraient avoir une manette 10 et des premières touches 12 identiques à celles d'une calculatrices prévues pour être actionnées de la main droite. Seule la position des deuxièmes touches doit nécessairement être changée pour qu'une calculatrice soit utilisable avec l'autre main. D'autre part, il existe une multitude de modèle de calculatrices. Chaque modèle de calculatrice possède un assortiment de touches qui lui est propre. Les différents assortiments de touches se distinguent les uns des autres aussi bien par le nombre de touches que par les fonctions de ces touches. En particulier, une calculatrice multifonctions conforme à l'invention pourrait éventuellement comprendre, en plus de premières et de deuxièmes touches 12, 14 et 15, des troisièmes touches agencées dans une zone de saisie supplémentaire. Ces troisièmes touches pourraient même éventuellement être agencées pour être actionnées par la deuxième main de l'utilisateur. Dans ces conditions, on comprendra en particulier que le choix des touches des calculatrices décrites à titre d'exemple de la description qui précède est donné uniquement à titre d'exemple, et ce choix pourrait donc être changé de multiples manières sans sortir du cadre de l'invention.

## Revendications

1. Calculatrice électronique comprenant une alimentation électrique, une interface de saisie (10, 12, 14, 15) pour entrer des nombres et des opérations mathématiques à effectuer, une mémoire pour mémoriser des données, un microprocesseur pour effectuer des opérations sur les nombres entrés, un dispositif d'affichage numérique (18) pour indiquer le résultat d'opérations effectuées sur les nombres entrés, et un boîtier (20) comportant un bord avant (22) et un bord arrière (24) situés à l'opposé l'un de l'autre, le boîtier comportant encore une base (26) et une face supérieure (28) s'étendant toutes les deux entre le bord arrière (24) et le bord avant (22), l'interface de saisie (10, 12, 14, 15) comportant une manette (10) s'élevant au-dessus de la face supérieure (28) du boîtier (20), la manette étant prévue pour permettre la saisie manuelle de nombres et étant agencée pour pouvoir être basculée sélectivement dans une pluralité de positions actives en l'inclinant dans des directions correspondantes à partir d'une position de repos, chacune des directions correspondant à un chiffre différent, le microprocesseur étant agencé pour associer chaque basculement de la manette dans une des dites positions actives à la saisie du chiffre correspondant, la face supérieure (28) comportant une zone de saisie avant (34) et une zone de saisie arrière (36), la manette (10) étant située dans la zone de saisie avant, et la zone de saisie arrière présentant une pluralité de premières touches (12) associées respectivement à des opérateurs mathématiques, et l'interface de saisie (10, 12, 14, 15) comportant encore au moins une deuxième touche (14, 15) ; **caractérisée**
**en ce que** les premières touches sont positionnées relativement à la manette de manière à ce que les extrémités des doigts d'une main d'un utilisateur puisse se trouver chacune en regard d'une des premières touches (12) lorsque la paume de ladite main est tournée vers le bas et que le creux de ladite main coiffe l'extrémité de la manette (10), et
**en ce que** ladite au moins une deuxième touche (14, 15) est arrangée sur le boîtier (20) en arrière de la manette (10) et déportée sur le côté relativement à l'axe longitudinal de la calculatrice, de manière à se trouver en regard du pouce de ladite main lorsque les doigts de ladite main se trouvent en regard des premières touches (12), le creux de ladite main coiffant simultanément l'extrémité de la manette (10).

2. Calculatrice électronique selon la revendication 1, **caractérisée en ce que** ladite au moins une deuxième touche (14, 15) comprend une touche « égale » (15).

3. Calculatrice électronique selon la revendication 1 ou 2, **caractérisée en ce que** ladite au moins une deuxième touche (14, 15) est arrangée en regard du pouce sur la face supérieure (28) de manière à être actionnable par un mouvement du pouce vers le bas.

4. Calculatrice électronique selon la revendication 1 ou 2, **caractérisée en ce que** ladite au moins une deuxième touche (14, 15) est arrangée en regard du pouce sur une surface verticale ou inclinée du boîtier (20), une normale à ladite surface étant orientée latéralement de manière à ce que ladite au moins une deuxième touche puisse être actionnée par un mouvement du pouce en direction latérale.

5. Calculatrice électronique selon la revendication 1, **caractérisée en ce que** la zone de saisie arrière (36) est inclinée vers l'arrière.

6. Calculatrice électronique selon la revendication 1 ou 5, **caractérisée en ce que** les premières touches (12) sont arrangées dans la zone de saisie arrière (36) de manière à constituer une rangée rectiligne ou une rangée en arc de cercle.

7. Calculatrice électronique selon la revendication 6, **caractérisée en ce que** ladite rangée constituée par les premières touches (12) est orientée tangentiellement à un cercle concentrique à la manette (10).

8. Calculatrice électronique selon l'une des revendications précédentes, **caractérisée en ce que** la face supérieure (28) du boîtier (20) comporte une zone d'appui (30), la zone d'appui étant située entre la zone de saisie avant (34) et le bord avant (22) du boîtier.

9. Calculatrice électronique selon l'une des revendications précédentes, **caractérisée en ce que** le dispositif d'affichage numérique (18) est arrangé dans une fenêtre du boîtier (20), la fenêtre étant formée dans une zone d'affichage (32) de la face supérieure (28), la zone d'affichage étant située entre la zone de saisie arrière (36) et le bord arrière du boîtier (24).

10. Calculatrice électronique selon la revendication 9, **caractérisée en ce que** la zone d'affichage (32) est verticale ou inclinée, et **en ce qu'**elle est tournée vers l'avant.

11. Calculatrice électronique selon l'une des revendications précédentes, **caractérisée en ce qu'**elle est adaptée pour être connectée à un ordinateur, de manière à servir d'interface de saisie pour l'ordinateur.

12. Calculatrice électronique selon la revendication 11, **caractérisée en ce qu'**elle est adaptée pour être connectée à l'ordinateur par une connexion sans fil.

13. Calculatrice électronique selon l'une des revendications précédentes, **caractérisée en ce que** ladite au moins une deuxième touche (14, 15) est déportée sur le côté gauche relativement à l'axe longitudinal de la calculatrice, de manière à permettre la saisie avec la seule main droite.

14. Calculatrice électronique selon l'une des revendications 1 à 12, **caractérisée en ce que** ladite au moins une deuxième touche (14, 15) est déportée sur le côté droit relativement à l'axe longitudinal de la calculatrice, de manière à permettre la saisie avec la seule main gauche.

## Patentansprüche

1. Elektronenrechner, der eine Stromversorgung umfasst, eine Eingabeschnittstelle (10, 12, 14, 15), um Zahlen einzugeben und mathematische Operationen durchzuführen, einen Speicher zum Speichern von Daten, en Mikroprozessor, um Operationen mit den eingegebenen Zahlen durchzuführen, eine digitale Anzeigevorrichtung (18), um das Ergebnis von durchgeführten Operationen mit den eingegebenen Zahlen anzugeben, und ein Gehäuse (20), das einen vorderen Rand (22) und einen hinteren Rand (24) umfasst, die einander gegenüber liegen, wobei das Gehäuse eine Basis (26) und eine Oberseite (28) umfasst, die sich beide zwischen dem hinteren Rand (24) und dem vorderen Rand (22) erstrecken, wobei die Eingabeschnittstelle (10, 12, 14, 15) einen Griff (10) umfasst, der sich über die Oberseite (28) des Gehäuses (20) hinaus erhebt, der Griff ist vorgesehen, um die manuelle Eingabe von Zahlen zu gestatten, und ist angeordnet, um selektiv in eine Vielzahl von aktiven Positionen gekippt werden zu können, indem man ihn von einer Ruhestellung aus in entsprechenden Richtungen neigt, wobei jede der Richtungen einer anderen Zahl entspricht, wobei der Mikroprozessor angeordnet ist, um jedes Kippen des Griffes in eine der sogenannte aktiven Positionen mit der Eingabe der entsprechenden Zahl zu verbinden, wobei die Oberseite (28) einen vorderen Eingabebereich (34) und einen hinteren Eingabebereich (36) umfasst, wobei der Griff (10) in dem vorderen Eingabebereich liegt und der hintere Eingabebereich eine Vielzahl von ersten Tasten (12) aufweist, die mathematischen Operatoren zugeordnet sind, und wobei die Eingabeschnittstelle (10, 12, 14, 15) noch mindestens eine zweite Taste (14, 15) umfasst; **dadurch gekennzeichnet, dass** die ersten Tasten in Bezug auf den Griff so positioniert sind, dass die Fingerenden einer Hand eines Nutzers jeweils gegenüber einer der ersten Tasten (12) liegen können, wenn der Handteller besagter Hand nach unten gewandt ist und die Handfläche das Ende des Griffes (10) bedeckt, sowie dadurch, dass besagte mindestens eine zweite Taste (14, 15) auf dem Gehäuse (20) hinter dem Griff (10) angeordnet ist und an der Seite betreffs der Längsachse des Rechners versetzt ist, so dass sie sich gegenüber dem Daumen besagter Hand befindet, wenn die Finger besagter Hand sich gegenüber den ersten Tasten (12) befinden und die Handfläche gleichzeitig das Ende des Griffs (10) bedeckt.

2. Elektronenrechner nach Anspruch 1, **dadurch gekennzeichnet, dass** besagte mindestens eine zweite Taste (14, 15) eine Taste «gleich» (15) umfasst.

3. Elektronenrechner nach Anspruch 1 oder 2, **dadurch gekennzeichnet, dass** besagte mindestens eine zweite Taste (14, 15) betreffs dem Daumen auf der Oberseite (28) angeordnet ist, um durch eine Bewegung des Daumens nach unten betätigbar zu sein.

4. Elektronenrechner nach Anspruch 1 oder 2, **dadurch gekennzeichnet, dass** besagte mindestens eine zweite Taste (14, 15) 20 gegenüber dem Daumen auf einer senkrechten oder geneigten Oberfläche des Gehäuses (20) angeordnet ist, wobei eine Normale zu besagter Oberfläche seitlich ausgerichtet ist, so dass besagte mindestens eine zweite Taste durch eine Bewegung des Daumens in seitliche Richtung betätigt werden kann.

5. Elektronenrechner nach Anspruch 1, **dadurch gekennzeichnet, dass** der hintere Eingabebereich (36) nach hinten geneigt ist.

6. Elektronenrechner nach Anspruch 1 oder 5, **dadurch gekennzeichnet, dass** die ersten Tasten (12) in dem hinteren Eingabebereich (36) angeordnet sind, um eine geradlinige Reihe oder eine halbkreisförmige Reihe darzustellen.

7. Elektronenrechner nach Anspruch 6, **dadurch gekennzeichnet dass** besagte Reihe, die aus den ersten Tasten (12) besteht, tangential zu einem Kreis ausgerichtet ist, der konzentrisch zu dem Griff (10) ist.

8. Elektronenrechner nach einem der vorangegangenen Ansprüche, **dadurch gekennzeichnet, dass** die Oberseite (28) des Gehäuses (20) einen Stützbereich umfasst (30), der zwischen dem vorderen Eingabebereich (34) und dem vorderen Rand (22) des Gehäuses liegt.

9. Elektronenrechner nach einem der vorangegangenen Ansprüche, **dadurch gekennzeichnet, dass** die digitale Anzeigevorrichtung (18) in einem Fenster des Gehäuses (20) angeordnet ist, das Fenster in einem Anzeigebereich (32) der Oberseite (28) gebildet ist und der Anzeigebereich zwischen dem hinteren Eingabebereich (36) und dem hinteren Rand des Gehäuses (24) liegt.

10. Elektronenrechner nach Anspruch 9, **dadurch gekennzeichnet, dass** der Anzeigebereich (32) senkrecht oder geneigt ist, und dadurch, dass er nach vorn gewandt ist.

11. Elektronenrechner nach einem der vorangegangenen Ansprüche, **dadurch gekennzeichnet, dass** er angepasst ist, um mit einem Computer verbunden zu werden, um als Eingabeschnittstelle für den Computer zu dienen.

12. Elektronenrechner nach Anspruch 11, **dadurch gekennzeichnet, dass** er angepasst ist, um mit dem Computer über eine drahtlose Verbindung verbunden zu werden.

13. Elektronenrechner nach einem der vorangegangenen Ansprüche, **dadurch gekennzeichnet, dass** besagte mindestens eine zweite Taste (14, 15) an die linke Seite in Bezug auf die Längsachse des Rechners versetzt ist, um das Erfassen nur mit der rechten Hand zu gestatten.

14. Elektronenrechner nach einem der Ansprüche 1 bis 12, **dadurch gekennzeichnet dass** besagte mindestens eine zweite Taste (14, 15) an die rechten Seite in Bezug auf die Längsachse des Rechners versetzt ist, um das Erfassen nur mit der linken Hand zu gestatten.

## Claims

1. Electronic calculator comprising a power supply, an input interface (10, 12, 14, 15) for entering numbers and mathematical operations to be carried out, a memory for storing data, a microprocessor for carrying out operations on the entered numbers, a digital display device (18) for showing the result of operations carried out on the entered numbers and a casing (20) comprising a front edge (22) and a rear edge (24) located opposite each other, the casing further comprising a base (26) and an upper face (28) both extending between the rear edge (24) and the front edge (22), the input interface (10, 12, 14, 15) comprising a lever (10) projecting above the upper face (28) of the casing (20), the lever being designed to allow numbers to be entered manually and being arranged to be able to be selectively tilted in a plurality of active positions by being inclined in corresponding directions from a rest position, each direction corresponding to a different number, the microprocessor being arranged to associate every tilt of the lever in one of said active positions with the entry of the corresponding number, the upper face (28) comprising a front input zone (34) and a rear input zone (36), the lever (10) being located in the front input zone and the rear input zone having a plurality of first keys (12) respectively associated with mathematical operators, and the input interface (10, 12, 14, 15) further comprising at least one second key (14, 15), **characterised**
**in that** the first keys are positioned relative to the lever so that the ends of the fingers of a hand of a user each can be located facing one of the first keys (12) when the palm of said hand is turned downwards and the hollow of said hand covers the end of the lever (10), and
**in that** said at least one second key (14, 15) is arranged on the casing (20) behind the lever (10) and is offset to the side relative to the longitudinal axis of the calculator so as to be facing the thumb of said hand when the fingers of said hand are facing the first keys (12), the hollow of said hand simultaneously covering the end of the lever (10).

2. Electronic calculator according to claim 1, **characterised in that** said at least one second key (14, 15) comprises an equals key (15).

3. Electronic calculator according to claim 1 or claim 2, **characterised in that** said at least one second key (14, 15) is arranged facing the thumb on the upper face (28) so that it can be activated by a downwards movement of the thumb.

4. Electronic calculator according to claim 1 or claim 2, **characterised in that** said at least one second key (14, 15) is arranged facing the thumb on a vertical or inclined surface of the casing (20), a normal line to said surface being oriented laterally so that said at least one second key can be activated by a movement of the thumb in the lateral direction.

5. Electronic calculator according to claim 1, **characterised in that** the rear input zone (36) is rearwardly inclined.

6. Electronic calculator according to claim 1 or claim 5, **characterised in that** the first keys (12) are arranged in the rear input zone (36) so as to form a straight row or a row in an arc of a circle.

7. Electronic calculator according to claim 6, **characterised in that** said row formed by the first keys (12) is oriented at a tangent to a circle concentric to the lever (10).

8. Electronic calculator according to any one of the preceding claims, **characterised in that** the upper face (28) of the casing (20) comprises a support zone (30), the support zone being located between the front input zone (34) and the front edge (22) of the casing.

9. Electronic calculator according to any one of the preceding claims, **characterised in that** the digital display device (18) is arranged in a window of the casing (20), the window being formed in a display zone (32) of the upper face (28), the display zone being located between the rear input zone (36) and the rear edge of the casing (24).

10. Electronic calculator according to claim 9, **characterised in that** the display zone (32) is vertical or inclined and **in that** it is facing forwards.

11. Electronic calculator according to any one of the preceding claims, **characterised in that** it is adapted to be connected to a computer so as to act as an input interface for the computer.

12. Electronic calculator according to claim 11, **characterised in that** it is adapted to be connected to the computer by a wireless connection.

13. Electronic calculator according to any one of the preceding claims, **characterised in that** said at least one second key (14, 15) is offset to the left-hand side relative to the longitudinal axis of the calculator so as to allow entry with the right hand only.

14. Electronic calculator according to any one of claims 1 to 12, **characterised in that** said at least one second key (14, 15) is offset to the right-hand side relative to the longitudinal axis of the calculator so as to allow entry with the left hand only.
